# EUROPEAN PATENT SPECIFICATION

(11) **EP 1 370 505 B1**
(45) Date of publication and mention of the grant of the patent: **14.11.2007**
(21) Application number: 02708879.8
(22) Date of filing: 18.03.2002
(51) Int. Cl.: C05G 1/00, C05G 3/00, C05D 9/02, A01N 37/44

(54) **AGRICULTURAL AND HORTICULTURAL COMPOSITION**
LANDWIRTSCHAFTLICHE UND GARTENBAULICHE ZUSAMMENSETZUNG
COMPOSITION DESTINEE A L'AGRICULTURE ET A L'HORTICULTURE

(30) Priority: 19.03.2001 SE 0100949
(43) Date of publication of application: 17.12.2003
(73) Proprietor: NoroGard AB, 274 32 Skurup (SE)
(72) Inventor: WAHLBERG, Sofia, S-274 36 Skurup (SE)
(74) Representative: Stenbäck, Maria Elisabeth
(86) International application number: PCT/SE2002/000513
(87) International publication number: WO 2002/074716

(56) References cited:
- EP-A1- 0 617 008
- US-A- 3 867 419
- US-A- 5 350 735
- DATABASE WPI Week 198705, Derwent Publications Ltd., London, GB; AN 1987-033973, XP002969745 & JP 61 291 482 A (YOKOYAMAT) 22 December 1986
- DATABASE WPI Week 199026, Derwent Publications Ltd., London, GB; AN 1990-197994, XP002189983 & JP 2 131 530 A (DAICHIKU KASEI KOGY) 21 May 1990
- DATABASE WPI Week 197441, Derwent Publications Ltd., London, GB; AN 1974-71645V, XP002969746 & JP 48 075 350 A (HATORIM) 11 October 1973

## Description

### Field of the invention

The present invention relates to a composition for resorption of micro-nutrients in plants, or pre-stages thereof, containing a micro-nutrient agent, an organic acid and an amino acid, a method of producing said composition and the use of said composition.

### Background of the invention

In the agricultural and horticultural section the need for addition of micro-nutrients is a problem that has been recognised for a long time. The state of the soil, the minerals present, the pH value and other factors, have an influence on to what extent micro-nutrients are available to the plant. Lack of micro-nutrients in the soil or unfavourable conditions for micro-nutrient resorption lead to weaker plant growth and to lower yield of the crop.

Lack of micro-nutrients or low resorption of micro-nutrients, cannot be compensated with an increase in available macro-nutrients. The lack of resorption of micro-nutrients will also reduce the effect of other nutrients with a considerable negative effect on crop yield and financial outcome for the grower.

Substances regarded as micro-nutrients are ions of manganese, boron, iron, copper, zink, molybdenum, cobalt, aluminium, vanadium, nickel, sodium, selenium, chlorine, fluorine and iodine ("Development, Visual and Analythical Diagnosis", edited by Werner Bergmann, publisher Gustav Fischer, ISBN 3-334-60422-5).

Uptake, or resorption, of micro-nutrients is complex and not fully understood. It is however generally recognised that the micro-nutrient must be in solution or presented to the plant in a dispersed state e.g. in a complexed form, regardless to which part of the plant the micro-nutrient is administered.

Many attempts have previously been made, with various degrees of success, in order to increase the plant's uptake of micro-nutrients. One example of such an attempt is the use of polymer sesquestrants as described in US 3,980,462. In US 4,425,149 the use of leonardite ore as a chelating agent is described. The final product according to US 4,425,149 is a powder that needs to be dissolved in water.

In US 4,505,732 another attempt to create increased resorption of micro-nutrients in plants is described. The micro-nutrients are mixed with chelat or complex forming compounds and dried upon particles of a water soluble polymer. A surfactant is included to enhance water solubility of the preparation.

EP 0 284 339 describes the use of leonardite ore, or rather a fraction of leonardite ore, in combination with EDTA, or similar sesquestrants, to create increased resorption of the micro-nutrient.

A suspension of the micro-nutrient in a composition containing a surfactant and a thickening agent is described in EP 0 485 225 B1. WO 99/26898 describes the use of derivatives of EDTA and N-acyl derivatives, for the increase of resorption of plant micro-nutrients.

In PL 167383 the increase of resorption of micro-nutrients is generated by the use of chelating agents such as cysteine, glutamic acid and citric acid.

### Summary of the invention

In a first aspect the present invention relates to a composition as defined in claim 1 for resorption of micro-nutrients in plants, or pre-stages thereof, containing a micro-nutrient agent, an organic acid and an amino acid, said composition being obtainable by addition of at least one oxidizing agent during preparation of the composition, for oxidation of the micro-nutrient agent.

In one embodiment the micro-nutrient agent comprises an ion of an element selected from the group consisting of Cu, Mn, Mo, B, Fe, Zn, Co, Al, V, Se and Ni. In another embodiment the micro-nutrient agent comprises an ion of an element selected from the group consisting of Cu, Mn, Mo, Fe, Zn, Co, and Ni.

The organic acid is a di- or tribasic carboxylic acid selected from the group consisting of lactic acid, glycolic acid and citric acid.

The amino acid is soluble in polar solvents. In one embodiment the amino acid is methionine or lysine.

The oxidizing agent is hydrogen peroxide.

In one embodiment at least one growth and uptake stimulating agent is added to the composition. In another embodiment the growth and uptake stimulating agent is urea.

In still another embodiment at least one macro-nutrient agent is added to the composition. In yet another embodiment the macro-nutrient agent comprises an ion of an element selected from the group consisting of N, P, K, Ca, Mg, S, Na and Si.

In one embodiment at least one non-metal micro-nutrient agent is added to the composition. In another embodiment the non-metal micro-nutrient agent comprises an ion of an element selected from the group consisting of B, Cl, F, I and Se.

In one embodiment at least one agent for treatment of bacterial and fungal diseases of plants is mixed with the composition.

In second aspect the present invention relates to a method as defined in claim 12 of producing a composition for resorption of micro-nutrients in plants, or pre-stages thereof, containing a micro-nutrient agent, an organic acid and an amino acid, said method comprising the steps of
dissolution of at least one micro-nutrient agent and at least one organic acid selected from lactic acid, glycolic acid and citric acid in a polar solvent;
addition of hydrogen peroxide as an oxidizing agent; and
addition of at least one amino acid.

In one embodiment the oxidizing agent is added after complete dissolution of the micro-nutrient agent.

The temperature is kept below 60°C during the oxidation of the micro-nutrient agent and the addition of the amino acid.

In another embodiment the starting temperature before addition of the amino acid is below 42°C.

In still another embodiment the solvent is water or mixtures of water and at lest one lower alcohol.

In a further embodiment the lower alcohol is selected from the group consisting of methanol, ethanol, propylene glycol, glycerol, mannitol and xylitol.

In a third aspect the present invention relates to the use of a composition according to the invention or a composition produced by a method according to the invention, for resorption of micro-nutrients in plants, or prestages thereof.

### Detailed description of the invention

In the present invention the problem of resorption of a micro-nutrient in a plant, as described earlier in this application, has been solved by a novel technique in which the micro-nutrient is made more readily available to the plant, or the pre-stages thereof (By "pre-stages thereof" referred to herein is meant seed, sprout, cutting, seedling, artificial seed and meristem tissue(s) and plants). This is accomplished by oxidation of the micronutrient(s) and by the formation of a complex of the micro-nutrient(s) with the components of the composition, preferably between the micro-nutrient(s) and the organic and amino acid.

The mechanism underlying the invention is not at present fully understood.

### Materials

The composition of the present invention comprises, in its most fundamental form, at least one micro-nutrient agent, at least one organic acid, at least one amino acid and at least one oxidizing agent.

The solvents used in the process are preferably polar solvents and suitable candidates are water and mixtures of water and lower alcohols such as ethanol, methanol, propylene glycol, glycerol, mannitol and xylitol.

The organic acid(s) used is selected from citric acid, lactic acid and glycolic acid. The organic acid is preferably present in an amount of 5-90 kg, more preferably 10-70 kg, and most preferably 20-50 kg per 1000 1 of the composition.

The micro-nutrient(s) are selected from the following group of elements comprising Cu, Mn, Mo, Fe, Zn, Co, Al, V, and Ni. The preferred amounts of the micro-nutrients are Cu 0,1-200 , Mn 0,1-200, Mo 0,01-0,25, Fe 0,1-150, Zn 0,01-300 ,Co 0,01-3, Al 0,01-5 , V 0,01-5, and Ni 0,01-5 g/l composition.

The preferred concentration of the oxidizing agent is 5-120 1, more preferably 10-90 1, and most preferably 15-60 1 per 1000 1 of the composition.

Amino acids within the meaning of the present invention are defined conventionally as a class of important organic acids which contain both a carboxylic and amino group.

The amino acid(s) added is selected by solubility in the earlier defined solvents and by availability. Non restricting examples of suitable amino acids are methionine and lysine. The preferred amount of amino acid is 1-30 kg/1500 kg composition= 0,00067-0,02 %, more preferably 5-20 kg/1500 kg composition=0,0033-0,0133% and most preferably 7-15 kg/1500 kg composition=0,00467-0,01%.

A growth and uptake stimulating agent can preferably be added to the composition. It should be soluble in water and in mixtures of water and other polar solvents. Such agents are known to a person skilled in the art. One example is urea.

### Methods

The organic acid is dissolved in the solvent and the micro-nutrient agent(s) is added and dissolved while stirring in a suitable reaction vessel. When the micro-nutrient agent(s) is completely dissolved the oxidizing agent is added. The temperature should not exceed 60°C during the oxidation. After completion of the reaction the amino acid(s) is added to the reaction vessel. The temperature must not exceed 60°C during this step of the method and the starting temperature should preferably not exceed 42°C. The mixture is then stirred.

When the reaction is completed other ingredients as defined under detailed description and below can be added to the composition of the present invention. Suitable mixing times and intensities will have to be selected based on which types of other ingredients that are added and based on information known to the person skilled in the art. Preferred mixing times and temperatures are listed in Table 1 below.

Other ingredients, which are of benefit to the plant growth and plant health, is macro-nutrients (N, P, K, Ca, Mg, S, Na and Si), non-metal micro-nutrients (B, Cl, F, I and Se), growth and uptake stimulating agents such as but not restricted to urea and other ammonium compounds, wetting agents in order to make the wax layer more permeable to the nutrients and increase the contact surface of the nutrients with the plant-tissue such as but not restricted to non-ionic polyalkylene-oxide modified primary alcohols and polymers for the control of viscosity of the formulation. These other benificial ingredients are preferably added after the oxidation of the micro-nutrient agent(s). Preferred amounts of macro-nutrients are for N 10-400, P 10-100, K 10-300, Ca 10-300, Mg 1-100, S 1-200, Na 10-500 and Si 1-500 g/l composition. Preferred amounts of non-metal micro-nutrients are for B 0,1-150, Cl 1-500, F 0,01-5 and I 0,01-5 and Se 0,01-200 g/l

The composition of the invention is also miscible with commercial formulations of insecticides, herbicides, fungicides. This means that the product can be applied together with other crop protection products using e.g. a field sprayer where the products are dissolved and under agitation during the application, in a seed treater where the other seed protectants as bactericides, fungicides and or insecticides are added in a pre-mix or as a simultaneous treatment where the protectants are added in the treatment zone or other application technique suitable for the plant or "pre-stages" thereof treated.

### Examples

### Example 1

For the production of 1000 1 of the composition of the present invention 31 kg citric acid (98,9%), at a temperature of 8-12°C, and 540 kg manganese sulphate (manganese 31-32%) were mixed with 780 1 of water, at a temperature of 10-15°C. The reaction was carried out at a temperature of 40°C for 25 minutes. 27 1 of hydrogen peroxide (30 %) was then added to the solution, which was stirred for 40 minutes at a temperature of 40°C. Then, 8 kg of methionine (99,8 %) was added at a temperature of 45°C and mixed for 35 minutes. Finally 99 kg of urea (46 %) was added at a temperature of 41,2°C to the solution, which was then mixed for 50 minutes. Table 1 discloses the process parameters used in the production in Example I.

**Table 1. Process parameters**

| Process step | Temp (°C) | Mixing/reaction time (min) |
|---|---|---|
| Dissolution of citric acid | 10-15 | |
| Dissolution of manganese sulphate | 40 | 25 |
| Oxidation reaction with H₂O₂ | 40 | 40 |
| Dissolution of methionine | 45 | 35 |
| Dissolution of urea | 41 | 50 |

When necessary, the composition was filtered through a suitable filter of a quality based on information well known to the person skilled in the art.

### Test method - foliage application

The composition manufactured according to Example 1 was tested regarding resorption of micro-nutrient(s) to plants. Field trials where conducted at different locations in Sweden using oats. The stages of application is prior to seeding of any "pre-stages" of plants or during latter stages of the plant, from 2-3 three leaf stage up to heading time. The formulation has been applied to the foliage by spraying. For comparison plants have been sprayed with both a commercially available standard product (Mantrac 500 from Phosyn, a suspension of manganese-carbonate and sulphate) and with a composition according to the present invention. Untreated plants were used as control plants.

The symptoms of deficiency have been monitored both as a "visual" assessment on "yellow" leaf areas or as other typical leaf symptoms known for the deficiency of specific disorders of micro-nutrients and as the content of micro-nutrients in the plants expressed as amount of micro-nutrients per dry matter weight and as content in the plant sap (The analyses of content of mirco-nutrients were conducted both as content per dry matter by HM-Miljölab, Kalmar, Sweden and in the plant sap by LMI AB, Helsingborg, Sweden.) The crop yield has been monitored as well. The results are shown in Tables 2-4 below.

**Table 2. Increase in dry weight after treatment of crop with a micro-nutrient composition according to example 1 in comparison with a commercial product.**

| The treatment was conducted on June 14, 2000 | | | | |
|---|---|---|---|---|
| Treatment | Rate of application | Dry weight (g) | | |
| | g/ha | June 14* | June 26 | July 3 |
| Untreated | | 8,6 | 13,2 | 10,7 |
| Standard product | 500 | 8,6 | 12,9 | 11,2 |
| The invention | 200 | 8,6 | 13,7 | 12,7 |

| | | | | |
|---|---|---|---|---|
| * before treatment | | | | |

**Table 3. Concentration of manganese in crop after treatment with a product according to example 1 compared with a commercial product.**

| The treatment was conducted on June 14, 2000 | | | | |
|---|---|---|---|---|
| Treatment | Rate of application | Conc of Mn (mg/kg dry substance) | | |
| | g/ha | June 14* | June 26 | July 3 |
| Untreated | | 8 | 12 | 10 |
| Standard product | 500 | 8 | 21 | 19 |
| Invented product | 200 | 8 | 27 | 21 |

| | | | | |
|---|---|---|---|---|
| * before treatment | | | | |

**Table 4. Crop yield after treatment with a product manufactured according to example 1 in comparison with a commercial micro-nutrient product and a non treated area.**

| | |
|---|---|
| Yield kg/ha | |
| Untreated | 190 |
| Standard product | 1250 |
| Invented product | 2010 |

### Conclusion

Analysis after treatment with the composition of the present invention show an increased content of the micro-nutrient in the plant. The increased yield and growth of seedlings show that the plant has utilised and benefited from the treatment. The effect of treatment of plants with this product is higher yield and the reversal of the symptoms of manganese deficiency, yellowing leaves etc.

### Test method - seed- application

The composition according to the invention was applied to barley and oat seed. For comparison seed were also sprayed with a commercially available standard product (CUTONIC^{®} Mn Primer 500 g/l) and with a composition according to the present invention. Untreated plants were used as control plants.

Green-house trials were conducted evaluating the seedling and plant development at early stages. The formulation was applied to the seed prior to seeding in soil Analysis results appear from Table 5 and 6 below.

**Table 5. Assay for Mn in barley seed treated with the composition according to Example 1 in comparison with a commercially available Mn carbonate product.**

| | Rate of application (mg/kg seed) | Content of Mn (mg/kg dry substance) |
|---|---|---|
| Untreated | | 75 |
| Standard product | 1000 | 288 |
| Invented product | 100 | 316 |

**Table 6. Plant growth after treatment of oat seed with the composition according to Example 1 in comparison with a standard commercially available product.**

| Height of plant | 15-24 cm | 25-35 cm | 36-40 cm | 40-44 cm |
|---|---|---|---|---|
| Untreated | 7 | 85 | 114 | |
| Standard product | 5 | 70 | 123 | |
| Invented product | | 34 | | 161 |

### Conclusions

A clear growth response was observed with plants earlier and faster developing. As a seed application in conjunction with application of the standard biological or chemical seed treatment products to control seed and soil-borne diseases a clear improved effect against these diseases has been observed in green-house trials.

### Example 2 - Gotland

Oat was grown on a location on Gotland, Sweden, with severe manganese conditions. Low rates of manganese in the soil and high pH in organic soil with a content of organic matter higher than 20%.

The invention, Microplan^{™} Manganese (150 gram manganese complex bound per liter, amino acids used were methionin and lysine, respectively), was applied to the foliage at growing stage DC 25 (early tillering). Manganese-80% EDTA (LMI, Helsingorg Sweden), Mangan 235 (Manganese Nitrate-BioMin, Gothenburg Sweden), Manganese sulphate (Erichem, Belgium) and Mantrac (Manganese carbonate-Phosyn, UK) were used for comparison.

The same amount of manganese was applied. The assessment, shown in the table 7 below, were done one week and two weeks after application. According to the following procedure: Manganese deficiency 0-100, scale 0 = no deficiency 100 = all plants/leaves showing deficiency (= yellow leaves).

**Table 7. Manganese deficiency 0-100, scale 0 = no deficiency, 100 = all plants. The results are shown as plant/leaf area with symptoms of manganese deficiency**

| | 6/7-2001 | 16/7-2001 |
|---|---|---|
| Untreated | 89 | 89 |
| The invention-methionin | 28 | 31 |
| 0,5 l/ha | | |
| 1,0 l/ha | 16 | 19 |
| 1,5 l/ha | 14 | 14 |
| The invention-lysine | 19 | 18 |
| 1,0 l/ha | | |
| Manganese-EDTA | 43 | 34 |
| 80 % Mn 2,4 l/ha | | |
| Mn 235 | 38 | 38 |
| 1 l/ha | | |
| 1,5 l/ha | 35 | 32 |
| 2 l/ha | 35 | 34 |
| Manganese sulphate | 28 | 25 |
| 4 kg /ha | | |
| Mantrac | 53 | 59 |
| 1 l/ha | | |

### Conclusions

The invention has a superior effect. Using organic acids and amino acids as a complex binding agent is much better than EDTA. The invention has a superior effect over manganese nitrate all rates, manganese sulphate at 4 kg/ha and manganese carbonate/sulphate suspension at 1 1/ha under very severe manganese deficiency.

### Example 3 - foliage application in malting barley, Zn

The object was to increase the amount of zinc in the grain, which is beneficial for the yeast fungi. Two compositions according to the present invention were used:
- Microplan Malting Barley containing in g/l, methionine used as amino acid

| N | Mg | S | B | Cu | Fe | Mn | Mo | Na | Zn |
|---|---|---|---|---|---|---|---|---|---|
| 50 | 35 | 48 | 7 | 8,4 | 8,4 | 25 | 0,05 | 7 | 25 |

- Microplan Zinc containing 180 gram zinc, 90 gram sulphate and 50 gram nitrogen per liter, methionine used as amin acid. These solutions were compared in the experiment with standard products.

The products, which were compared with solutions according to the invention was Wuxal Suspension (chelated micro-nutrient product, Aglukon Spezialdunger Gmbh, Germany,), Zinctrac (suspension of carbonate/sulfate, Phosyn, UK)

The different products were applied at growing stage DC 47 (flag leaf fully developed). Analytical method SS 028311 developed at Växtekologiska Institutionen in Lund, using ICP = Integrated Coupled Plasma.

**Table 8. Zinc per kg dry matter in the grain**

| | Grain Zn mg/kg dry matter |
|---|---|
| Untreated | 33,2 |
| Wuxal suspensions 1 l + Zinctrac 1 l | 39,1 |
| Microplan Malting Barley 1 l + Microplan Zinc 1 l | 44,4 |

### Conclusions

Microplan Malting Barley plus Microplan Zinc gives a bigger uptake of zinc in the grain compared to the standard products.

### Example 4 - seed treatment, Mn

Crop: Barley
Growth media: Soil from Stenstugu, Gotland, Sweden
Container: Plastic; surface 16,5x11,5 cm, height 21 cm.
Treatment: Entry A treated with 200 ml Fungazil A per 100 kg
   Entry B treated with 200ml Fungazil A + 400ml Microplan Manganese Seed (per 100 kg)
Sowing: 2001-08-13 with 50 seeds per container
Handling: The containers were kept outdoor during the experiment, under a translucent plastic roof. Water was added as needed.

**Table 9. Emergence**

| Date | Entry A | Entry B |
|---|---|---|
| | no plants | no plants |
| 17-aug | 28 | 43 |
| 18-aug | 45 | 48 |
| 19-aug | 45 | 49 |
| 10-sep | 48 | 50 |

As the containers were somewhat conical the plants could be taken out without harming the roots. The plants with soil were wetted with water so no loss of roots occurred. After the plants were free of soil, they were photographed. Several of the plants were in 4-leaves stage and some plants had started to tiller.

After the soil had been taken away carefully. The plants were separated from the roots and dried at 60°C during 18 hours.

**Table 10. Assessment of dry weight**

| Entry | Weight tot g | | Weight of 50 pl | | | | Total weight | |
|---|---|---|---|---|---|---|---|---|
| | leaves (g) | roots (g) | leaves (g) | rel fig | roots (g) | rel fig | (g) | rel fig |
| A | 2,05 | 1,31 | 2,14 | 100 | 1,36 | 100 | 3,50 | 100 |
| B | 2,73 | 1,74 | 2,73 | 128 | 1,74 | 128 | 4,47 | 128 |

### Conclusions

The manganese treated plants had a slightly faster emergence and the development was better. More root and leaf mass was developed by the plants.

The dry weight increase is similar for roots and leaves. (128 compared to untreated)

### Example 5 - winter wheat trials

The seed used was identical with the seed for the field trial in Gotland in Example 2.
- Entry A: Treated with Sibutol (fuberidazol, Bitertanol)(fungicide seed treatment product)
- Entry B: Sibutol+ 300 ml Teprosyn (500 gram manganese carbonate/ sulphate suspension liter, Phosyn, UK) per 100 kg.
- Entry C: Sibutol + 300 ml Microplan Manganese (150 gram manganese complex bound per liter, according to the invention, lysine used as amino acid) per 100 kg
- Sowing:: 55 seeds per entry sown in plastic pots (16,5 x 11,5, hight 21 cm) in soil (Gotland)
- Emergence:: Emergence begun 29 Sept. Number of plants 1 Oct; A 45 pcs, B 43 pcs C 50 pcs (pcs= pieces or plants.

The pots were placed outdoors and water was applied as needed. The abnormal high temperatures during the summer of 2001 gave a quicker development than normal. The high temperature resulted in early attack of mildew around 20 Sept. The harvest had to be done already on 24 Oct. At harvest 90% of the plants were attacked.

**Table 11. Results**

| Entry | No plants | Average length,(cm) | | | | % plants with | |
|---|---|---|---|---|---|---|---|
| | | Root | Rel fig | Leaves | Rel fig | 2 leaves | 3 leavse |
| A | 52 | 23,04 | 100 | 23,48 | 100 | 33 | 67 |
| B | 51 | 24,41 | 106 | 23,28 | 99 | 37 | 63 |
| C | 53 | 25,96 | 113 | 23,71 | 100 | 34 | 66 |

### Conclusions

As the harvest was done when the development was to start no reliable difference in dry matter can be evaluated. The total weight of 50 plants were only 2 g and the difference at most 0.02 g. The emergence was somewhat quicker with Microplan Manganese, the solution according to the invention with lysine as amino acid.

Especially the roots untreated were concentrated under the seed. As a rule only one root per seed had normal growth in the group of untreated. The root length in B and especially C were superior.

The rate of manganese applied per kg seed is only one third in Microplan Manganese, the solution according to the invention, compared to the standard product. This proves that the invention gives a very efficient uptake and utilizing of manganese.

**Table 12. Plant analysis**

| | Manganese Mn/kg | Increase over untreated (%) |
|---|---|---|
| Untreated | 38 | |
| Teprosyn | 47 | 24 |
| The invention | 52 | 37 |

### Example 6 - germination, health and emergence in soil spring wheat Vinjett

The seed treatment fungicides Celeste, Panoctin, Cedemon were used alone and in combination with Microplan Manganese (see above), a solution according to the invention.
B= 200 ml Celest,
C= 200 ml Celest+ 300 ml Microplan Manganese,
D= 400 ml Panoctine,
E= 400 ml Panoctine+ 300 ml Microplan Manganese,
F=700 ml Cedomon,
G= 1000 ml Cedomon,
H= 1250 ml Cedomon,
I= 1500 ml Cedomon,
J= 1000 ml Cedomon + 300 ml Microplan Manganese

**Table 13**

| Entry | Germination % | | | Health % | | Emergence in soil % | | |
|---|---|---|---|---|---|---|---|---|
| | Normal | Abnorm | Dead | Fusarium | Septoria | Normal | Abnorm | Attack by fungi angr |
| A Untreated | 98 | 1 | 1 | 0 | 59 | 92 | 4 | 38 |
| B Celest | 95 | 3 | 2 | 0 | 12 | 88 | 5 | 5 |
| C Celest + Mn | 96 | 3 | 1 | 0 | 9 | 92 | 4 | 11 |
| D Panoctine | 97 | 2 | 1 | 0 | 13 | 93 | 2 | 24 |
| E Panoctine+Mn | 95 | 3 | 2 | 0 | 9 | 94 | 3 | 28 |
| F Cedomon 700 | 97 | 1 | 2 | 0 | 44 | 88 | 7 | 35 |
| G Cedomon 1000 | 92 | 5 | 3 | 0 | 48 | 86 | 5 | 39 |
| H Cedomon 1250 | 93 | 5 | 2 | 0 | 38 | 93 | 5 | 38 |
| I Cedomon 1500 | 90 | 7 | 3 | 0 | 33 | 90 | 6 | 39 |
| J Cedomon 1000 plus Mn | 93 | 5 | 2 | 0 | 34 | 93 | 6 | 45 |

Germination was done in rolled papers after 2 days at 10°C + 5 days at 20°C,4 x 100. Health was done in rolled papers after 4 days at 10°C + 5 days at 20°C, 2 x 100. Emergence in soil was assessed after 7 days at 10°C + 5 days at 20°C, 2 x 100.

### Conclusions

The effect against seed borne diseases are increased after addition of Microplan Manganese. This is probably an indirect effect as the plants treated with manganese get better root development, and stronger and faster growing plants.

## Claims

1. A composition for resorption of micro-nutrients in plants, or pre-stages thereof, containing a micro-nutrient agent, an organic acid and an amino acid, said composition being obtained by
dissolution of at least one micro-nutrient agent and at least one organic acid, selected from the group consisting of lactic acid, glycolic acid and citric acid, in a polar solvent;
addition of hydrogen peroxide;
then, after complete reaction with the hydrogen peroxide, addition of at least one amino acid, which is soluble in polar solvents; and
maintenance of the temperature below 60°C during the oxidation of the micro-nutrient agent and the addition of the amino acid.

2. A composition according to claim 1, wherein.the micro-nutrient agent comprises an ion of an element selected from the group consisting of Cu, Mn, Mo, Fe, Zn, Co, Al, V, and Ni.

3. A composition according to claim 1 or 2, wherein the micro-nutrient agent comprises an ion of an element selected from the group consisting of Cu, Mn, Mo, Fe, Zn, Co and Ni.

4. A composition according to any one of claims 1-3, wherein the amino acid is methionine or lysine.

5. A composition according to any one of claim 1-4, wherein at least one growth and uptake stimulating agent is added to the composition.

6. A composition according to claim 5, wherein the growth and uptake stimulating agent is urea.

7. A composition according to any one of claims 1-6, wherein at least one macro-nutrient agent is added to the composition.

8. A composition according to claim 7, wherein the macro-nutrient agent comprises an ion of an element selected from the group consisting of N, P, K, Ca, Mg, S, Na and Si.

9. A composition according to any one of claims 1-8, wherein at least one non-metal micro-nutrient agent is added to the composition.

10. A composition according to claim 9, wherein the non-metal micro-nutrient agent comprises an ion of an element selected from the group consisting of B, Cl, F, I and Se.

11. A composition according to any one of claims 1-10, wherein at least one agent for treatment of bacterial and fungal diseases of plants is mixed with the composition.

12. A method of producing a composition for resorption of micro-nutrients in plants, or pre-stages thereof, containing a micro-nutrient agent, an organic acid and an amino acid, said method comprising the steps of
dissolution of at least one micro-nutrient agent and at least one organic acid, selected from the group consisting of lactic acid, glycolic acid and citric acid, in a polar solvent;
addition of hydrogen peroxide;
then, after complete reaction with the hydrogen peroxide, addition of at least one amino acid, which is soluble in polar solvents; and
maintenance of the temperature below 60°C during the oxidation of the micro-nutrient agent and the addition of the amino acid.

13. A method according to claim 12, wherein the oxidizing agent is added after complete dissolution of the micro-nutrient agent.

14. A method according to any one of claims 12-13, wherein the starting temperature before addition of the amino acid is below 42°C.

15. A method according to any one of claims 12-14, wherein the solvent is water or mixtures of water and at lest one lower alcohol.

16. A method according to any one of claims 15, wherein the lower alcohol is selected from the group consisting of methanol, ethanol, propylene glycol, glycerol, mannitol and xylitol.

17. Use of a composition according to claims 1-11 or a composition produced by a method according to claims 12-16, for resorption of micro-nutrients in plants, or pre-stages thereof.

## Patentansprüche

1. Zusammensetzung für die Resorption von.
Mikronährstoffen in Pflanzen oder deren Vorstadien, die ein Mikronährstoffmittel, eine organische Säure und eine Aminosäure enthält, wobei die Zusammensetzung erhalten wird durch
Lösen wenigstens eines Mikronährstoffmittels und wenigstens einer organischen Säure ausgewählt aus der Gruppe bestehend aus Milchsäure, Glycolsäure und Citronensäure in einem polaren Lösungsmittel;
Zugabe von Wasserstoffperoxid;
dann, nach vollständiger Reaktion mit dem Wasserstoffperoxid, Zugabe von wenigstens einer Aminosäure, weiche in polaren Lösungsmitteln löslich ist; und
Halten der Temperatur unterhalb 60°C während der Oxidation des Mikronährstoffmittels und der Zugabe der Aminosäure.

2. Zusammensetzung nach Anspruch 1, wobei das Mikronährstoffmittel ein Ion eines Elements ausgewählt aus der Gruppe bestehend aus Cu, Mn, Mo, Fe, Zn, Co, Al, V und Ni umfasst.

3. Zusammensetzung nach Anspruch 1 oder 2, wobei das Mikronährstoffmittel ein Ion eines Elements ausgewählt aus der Gruppe bestehend aus Cu, Mn, Mo, Fe, Zn, Co und Ni umfasst.

4. Zusammensetzung nach einem der Ansprüche 1-3, wobei die Aminosäure Methionin oder Lysin ist.

5. Zusammensetzung nach einem der Ansprüche 1-4, wobei wenigstens ein das Wachstum und die Aufnahme stimulierendes Mittel zu der Zusammensetzung hinzugegeben ist.

6. Zusammensetzung nach Anspruch 5, wobei das das Wachstum, und die Aufnahme stimulierende Mittel Harnstoff ist.

7. Zusammensetzung nach einem der Ansprüche 1-6, wobei wenigstens ein Makronährstoffmittel zu der Zusammensetzung hinzugegeben ist.

8. Zusammensetzung nach Anspruch 7, wobei das Makronährstoffmittel ein Ion eines Elements ausgewählt aus der Gruppe bestehend aus N, P, K, Ca, Mg, S, Na und Si umfasst.

9. Zusammensetzung nach einem der Ansprüche 1-8, wobei wenigstens ein nichtmetallisches Mikronährstofmittel zu der Zusammensetzung hinzugegeben ist.

10. Zusammensetzung nach Anspruch 9, wobei das nichtmetallische Mikronährstoffmittel ein Ion eines Elements ausgewählt aus der Gruppe bestehend aus B, Cl, F, I und Se umfasst,

11. Zusammensetzung nach einem der Ansprüche 1-10, wobei wenigstens ein Mittel für die Behandlung von bakteriellen Krankheiten und Pilzkrankheiten von Pflanzen mit der Zusammensetzung gemischt ist.

12. Verfahren für die Herstellung einer Zusammensetzung für die Resorption von Mikronährstoffen in Pflanzen oder deren Vorstadien, die ein Mikronährstoffmittel, eine organische Säure und eine Aminosäure enthält:, wobei das Verfahren die Schritte umfasst
Lösen wenigstens eines Mikronährstoffmittels und wenigstens einer organischen Säure ausgewählt aus der Gruppe bestehend aus Milchsäure, Glycolsäure und Citronensäure in einem polaren Lösungsmittel; und
Zugabe von Wasserstoffperoxid;
dann, nach vollständiger Reaktion mit dem Masserstoffperoxid, Zugabe von wenigstens einer Aminosäure, welche in polaren Lösungsmitteln löslich ist; und
Halten, der Temperatur unterhalb 60°C während der Oxidation des Mikronährstoffmittels und der Zugabe der Aminosäure.

13. Verfahren nach Anspruch 12, wobei das Oxidationsmittel nach der vollständigen Lösung des Mikronährstoffmittels hinzugegeben wird.

14. verfahren nach einem der Ansprüche 12-13, wobei die Anfangstemperatur vor Zugabe der Aminosäure unterhalb 42°C liegt.

15. Verfahren nach einem der Ansprüche 12-14, wobei das Lösungsmittel Wasser oder Mischungen von Wasser und wenigstens einem niederen Alkohol ist.

16. Verfahren nach Anspruch 15, wobei der niedere Alkohol ausgewählt wird aus der Gruppe bestehend aus Methanol, Ethanol, Propylenglycol, Glycerin, Mannitol und Xylitol.

17. Verwendung einer Zusammensetzung nach den Ansprüchen 1-11 oder einer Zusammensetzung, die durch das Verfahren nach den Ansprüchen 12-16 hergestellt wird, für die Resorption von Mikronährstoffen in Pflanzen oder deren Vorstadien.

## Revendications

1. Composition pour la résorption d'oligoélemeuts chez les plantes, ou des stades preaminaires de celles-ci, contenant un agent d'oligoélément, un acide organique et un acide aminé, ladite composition étant obtenue par les étapes consistant à
dissoudre au moins un agent d'oligoélement et au moins un acide organique choisi dans le groupe constitue par l'acide lactique, l'acide glycolique l'acide citrique dans un solvant polaire;
ajouter du peroxyde d'hydrogène ;
puis, après réaction complète avec le peroxyde d'hydrogène, ajouter au moins un acide aminé qui est soluble dans des solvants polaires ; et
maintenir une température inférieure à 60°C pendant l'oxydation de l'agent d'oligoélément et l'ajout de l'acide aminé.

2. Composition selon la revendication 1, dans laquelle l'agent d'oligoélément comprend un ion d'un élément choisi dans le groupe constitué par Cu, Mn, Mo, Fe, Zn, Co, Al, V et Ni.

3. Composition selon la revendication 1 ou 2, dans laquelle l'agent d'oligoélément comprend un ion d'un élément choisi dans le groupe constitué par Cn, Mn, Mo, Fe, Zn, Co, et Ni.

4. Composition selon l'une quelconque des revendications 1 à 3, dans laquelle l'acide aminé est la méthionine ou la lysine.

5. Composition selon l'une quelconque des revendications 1 à 4, dans laquelle au moins un agent de stimulation de croissance et d'absorption est ajoute à la composition.

6. Composition selon la revendication 5, dans laquelle l'agent de stimulation de croissance et d'absorption est l'urée.

7. Composition selon l'une quelconque des revendications 1 à 6, dans laquelle au moins un agent de est ajouté à la composition.

8. Composition selon la revendication 7, dans laquelle l' agent de macroélément comprend un ion d'un élément choisi dans le groupe constitue, par N, P, K. Ca, Mg, S, Na et Si.

9. Composition selon l'une quelconque des revendications 1. à 8, dans laquelle au moins un agent d'oligoélément non métallique est ajouté la composition.

10. Composition selon la revendication 9, dans laquelle l'agent d'oligoélément non métallique comprend un ion d'un élément choisi dans le groupe constitué par B, Cl, F, et Se.

11. Composition selon l'une quelconque des revendications 1 à 10, dans laquelle au moins un agent pour le traitement des bactérioses et des mycoses des plantes est mélange à la composition.

12. Procédé de production d'une composition pour la résorption d'oligoéléments chez les plantes ou des stades préliminaires de celles-ci contenant un agent d'oligoélément, un acide organique et un acide aminé, ledit procédé comprenant les étapes consistant à,
dissoudre au moins un agent d'oligoélément et au moins un acide organique, choisi dans le groupe constitué par l'acide lactique, l'acide glycolique et l'acide citrique dans un solvant polaire :
ajouter du peroxyde d'hydrogène ;
puis, après réaction complète avec le peroxyde d'hydrogène, ajouter au moins un acide aminé qui est soluble dans des solvants polaires ; et
maintenir une température inférieure à 60°C pendant l'oxydation de l'agent d'oligoélément et l'ajout de l'acide aminé.

13. Procédé selon la revendication 12, dans lequel l'agent oxydant est ajouté après dissolution complète de ragent d'oligoélément.

14. Procède selon l'une quelconque des 12 à 13, dans lequel la température de départ avant l'ajout de l'acide aminé est inférieure à 42°C.

15. Procédé selon l'une quelconque des revendications 12 à 14, dans lequel le solvant est de l'eau ou des mélanges d'eau et d'au moins un alcool inférieur.

16. Procédé selon la revendication 15, dans lequel l'alcool inférieur est choisi dans le groupe constitué par le méthanol, l'ethanol, le propylène glycol, le glycérol, le mannitol et le xylitol.

17. Utilisation d'une composition selon les revendications 1 à 11 ou d'une composition produite par un procédé selon les revendications 12 à 16, pour la résorption d'oligoéléments chez les plantes ou des stades préliminaires de celles-ci.
